**Europäisches Patentamt**

**European Patent Office**

**Office européen des brevets**

(19)

(11) Veröffentlichungsnummer: **0 357 555 B1**

## (12) EUROPÄISCHE PATENTSCHRIFT

(45) Veröffentlichungstag der Patentschrift: **01.06.94**

(51) Int. Cl.5: **G01J 1/42**, G01J 1/06

(21) Anmeldenummer: **89810627.3**

(22) Anmeldetag: **23.08.89**

(54) Photometer, insbesondere zur Bestimmung der Schleierleuchtdichte.

(30) Priorität: **30.08.88 CH 3230/88**

(43) Veröffentlichungstag der Anmeldung:
**07.03.90 Patentblatt 90/10**

(45) Bekanntmachung des Hinweises auf die
Patenterteilung:
**01.06.94 Patentblatt 94/22**

(84) Benannte Vertragsstaaten:
**AT DE ES FR IT SE**

(56) Entgegenhaltungen:
**FR-A- 1 488 451
US-A- 3 813 172
US-A- 4 729 655**

**CIE-JOURNAL, Band 3, Nr. 2, 1984, Seiten
39-53; J.J. VOS: "Disability glare - a state of
the art report"**

**FIFTH EUROPEAN LIGHT CONGRESS: LUX
EUROPA, Lausanne, 9.-11. September 1985,
Seiten 3-15, Konferenzbericht Nr. 16; D.A.
SCHREUDER: "Design method for the
lighting of tunnels based on the assessment
of the veiling luminance"**

(73) Patentinhaber: **Riemenschneider, Werner
Rütelistrasse 5
CH-5417 Untersiggenthal(CH)**

(72) Erfinder: **Blaser, Peter
Egghölzlistrasse 40
CH-3006 Bern(CH)**

(74) Vertreter: **Keller, René, Dr. et al
Patentanwälte Dr. René Keller & Partner
Postfach 12
CH-3000 Bern 7 (CH)**

## Beschreibung

Die Erfindung betrifft ein Photometer, insbesondere zur Bestimmung der Schleierleuchtdichte, gemäß dem Oberbegriff des Patentanspruchs 1.

Aus der **US-A 4 792 655** ist ein gattungsgemäßes Photometer bekannt. Das bekannte Photometer hat ein optisches System, mit dem es möglich ist, die örtliche Intensitätsverteilung in einem Strahlenbündel, wie es aus Glasfasern emittiert wird, durch eine in den Strahlengang eingefügte Blende zu verändern. Die Blende ist eine transparente Scheibe mit flächigen, speziell gestalteten lichtundurchlässigen Bereichen. Sie befindet sich zwischen optischen Systemen, welche derart ausgelegt sind, daß eine vorgegebene Strahlaufweitung auf eine vorgegebene Blendenfläche und anschließend eine Veränderung des Strahldurchmessers erfolgt, je nachdem ob in eine Faser fokussiert oder eine Detektorfläche beleuchtet werden soll. In der US-A 4 792 655 werden nur örtliche Intensitätsverteilungen durch die Blenden verändert. Eine Abbildung eines reellen Bildes in einer Bildebene findet nicht statt. Sämtliche Blenden sind feststehend.

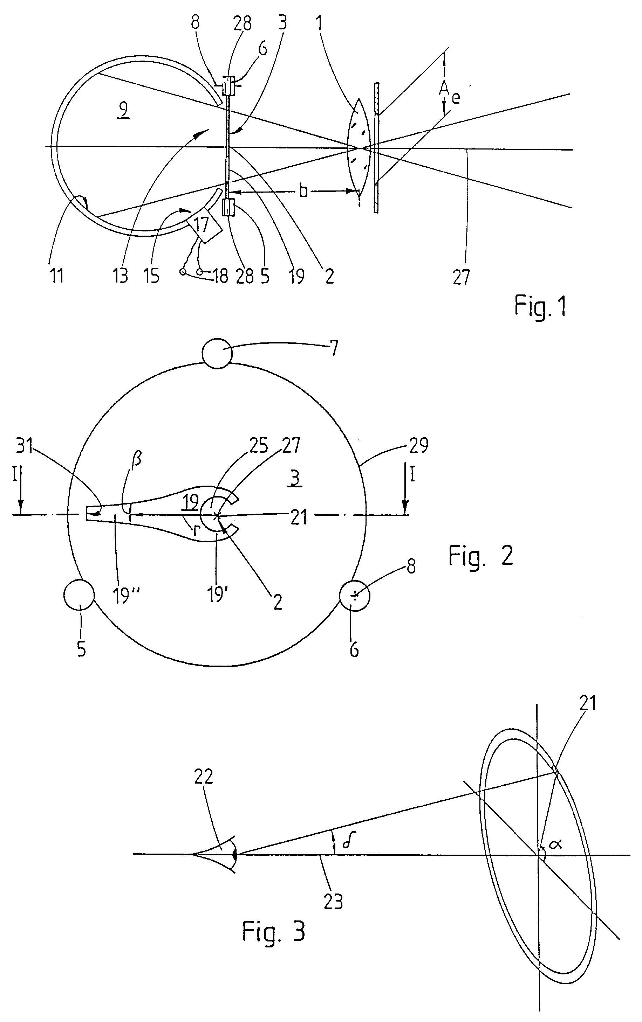

In der **FR-A 1 488 451** ist eine Methode und ein nicht gattungsgemäßes Photometer zur automatischen Bestimmung der Belichtungszeit für die Abbildung eines reellen Bildes auf einem photosensitiven Material beschrieben. Das Photometer ist in eine Vorrichtung mit einer Hauptlichtquelle und einer Hilfslichtquelle integriert, mit denen der Abbildungskontrast einstellbar ist. Das reelle Bild wird auf ein Fenster mit einem segmentförmigen Fensterausschnitt abgebildet, unter dem sich eine Lochscheibe dreht, deren Löcher gemäß einer Archimedischen Spirale angeordnet sind. Der Lochabstand ist derart gewählt, daß jeweils nur ein einziges Loch durch den Fensterausschnitt hindurchbewegt wird. Unterhalb der Lochscheibe befindet sich eine Photozelle, welche den jeweiligen Lichtstrom durch das die Fensteröffnung passierende Loch mißt, um so die punktuelle Helligkeitsverteilung des Bildes abscannen zu können, wie in Figur 2 dargestellt ist. Die Achse der Lochscheibe ist außerhalb des Strahlenganges der abbildenden Optik des reellen Bildes angeordnet. Gemäß der Differenz zwischen dem gemessenen maximalen und minimalen Lichtstrom erfolgt dann über einen Servomechanismus die Einstellung der Haupt- und der Hilfslichtquelle zur Kontrasteinstellung für die Belichtung des photografischen Materials.

Ein bekanntes Photometer dieser Art zur Messung der Schleierleuchtdichte hat eine Streulinse, hinter der eine Abbildungsoptik angeordnet ist, welche das von der Streulinse je nach dem Einfallswinkel in unterschiedlichem Maße durchgelassene Licht auf einen photoelektrischen Empfänger lenkt.

Die Schleierleuchtdichte ist die Leuchtdichte, die der Abbildung eines betrachteten Objekts in der Netzhautgrube des menschlichen Auges durch Streulicht aus der Hornhaut, der Linse und des Glaskörpers überlagert wird. (Beim scharfen Sehen ist das Auge bestrebt, sich so einzustellen, daß das Objekt in der Netzhautgrube abgebildet wird). Die Abbildung des Objekts wird dadurch verschleiert, der Kontrast des betrachteten Gegenstands verschlechtert, und unter Umständen ist der Gegenstand gar nicht mehr erkennbar. Auch die physiologische Blendung z. B. durch Beleuchtungskörper wird durch im Auge gestreutes Licht hervorgerufen. Das räumliche Feld, welches für die Erfassung der Schleierleuchtdichte herangezogen wird, sowie die Streufunktion, d. h. die Winkelabhängigkeit des Streuwertes wurde von verschiedenen Autoren experimentell ermittelt (z. B. J. J. Vos, "Disability glare - a state of the art report", CIE-Journal, Vol.3, No.2, Dec. 1984, pp. 39 - 53).

Die Streulinsen der bekannten Photometer lassen sich nicht, jedenfalls nicht ohne unverhältnismäßigen Aufwand, entsprechend der gewünschten Streufunktion reproduzierbar herstellen. Mit den bekannten Photometern war ferner die Bestimmung der Schleierleuchtdichte in einem definierten Winkelbereich nicht möglich. Es war z. B. nicht möglich, die für einen Autofahrer vor einer Tunneleinfahrt massgebende Schleierleuchtdichte zu bestimmen, für die der Winkelbereich zwischen der Tunneleinfahrt und dem Rahmen der Windschutzscheibe zu erfassen ist.

Bei einer anderen Art zur Bestimmung der Schleierleuchtdichte wird die Leuchtdichte von genügend vielen Teilzonen eines zu beobachtenden Objekts gemessen und anschließend die Schleierleuchtdichte gemäß einer zugrunde gelegten theoretischen Streufunktion berechnet (siehe Adrian W., "On the adaption luminance when approaching a tunnel in daytime", erscheint demnächst in Ltg. Res. Technol.; und Schreuder D.A., "Design method for the lighting of tunnels based on the assessment of the veiling luminance", Lux Europa 85, Konferenzbericht).

Diese Bestimmungsart ist sehr zeitaufwendig und für ständige Messungen, wie sie z. B. für eine Steuerung von Lichtquellen einer Tunnelbeleuchtung benötigt würden, ungeeignet.

Aufgabe der Erfindung ist es, ein einfaches, kostengünstiges Photometer zu schaffen, das eine winkelabhängig wertende Messung eines Leuchtdichtefeldes, insbesondere eine unmittelbare, dauernde Messung der Schleierleuchtdichte in einem bestimmten Raumwinkelbereich ermöglicht.

Die erfindungsgemäße Lösung dieser Aufgabe ist Gegenstand des Patentanspruchs 1. Gegenstände der Ansprüche 2 bis 11 sind bevorzugte Ausführungsformen des erfindungsgemäßen Photometers.

EP 0 357 555 B1

Die Scheibe läßt sich einfach in großen Stückzahlen mit übereinstimmenden lichtdurchlässigen Bereichen herstellen, so daß die Übereinstimmung der Meßergebnisse aller mit gleich aufgebauten Scheiben ausgerüsteten Photometern ohne weiteres gewährleistet ist. Mit dem erfindungsgemäßen Photometer ist es erstmals möglich, die Schleierleuchtdichte in einem beliebigen, nur durch die Abbildungsoptik begrenzten Raumwinkel zu erfassen, wobei ein zentraler abschattender Bereich um die optische Achse herum herstellbar ist. Mit ihr kann die Schleierleuchtdichte z. B. vor einer Tunneleinfahrt laufend gemessen und deren Beleuchtung entsprechend geregelt werden.

Der lichtdurchlässige Bereich kann im wesentlichen als radialer Schlitz ausgebildet sein, der einfach und kostengünstig, z.B. durch eine computergesteuerte Werkzeugmaschine in der gewünschen Genauigkeit, herstellbar ist.

Um den Einfall direkter Sonnenstrahlung auf die Empfängeroberfläche, die diese zerstören oder zumindest schädigen könnte, zu vermeiden, fällt in einer bevorzugten Ausführungsform die durch den lichtdurchlässigen Bereich der rotierenden Scheibe hindurchgehende Strahlung zuerst auf ein diffus streuendes Element. Dieses Element kann entweder das Licht diffus reflektieren, wie z. B. eine Ulbrichtsche Kugel, oder beim Durchgang diffus ablenken. Erst das diffus gestreute Licht gelangt in den Empfänger und hat dort dann eine Beleuchtungsstärke, die unter dessen Beschädigungsschwelle liegt.

Zur genauen Einstellung des Photometers sind die rotierende Scheibe und das streuende Element zweckmässig lösbar angeordnet, und an die Stelle der rotierenden Scheibe ist eine durchscheinende Scheibe, z. B. eine Mattscheibe, einsetzbar, auf der eine auszumessende Umgebung mittels der Abbildungsoptik abbildbar und mit dem Auge betrachtbar ist. Zur vereinfachten Einstellung kann die durchscheinende Scheibe kreisringförmige Markierungen tragen, deren Mittelpunkte auf der optischen Achse der Abbildungsoptik liegen. Das Photometer wird dann horizontal und vertikal so eingestellt, daß das auszumessende Gebiet symmetrisch zur optischen Achse liegt.

Der bzw. die lichtdurchlässigen Bereiche können vollständig oder teilweise mit teillichtdurchlässigem Material, bevorzugt Graufilterfolien, abgedeckt sein. Da Streufunktionen unter großen Sehwinkeln einfallendes Licht nur schwach bewerten, werden die Breiten der lichtdurchlässigen Bereiche mit zunehmendem radialen Abstand von der optischen Achse schmaler. Ihre theoretische Breite kann so klein werden, daß sich der Schlitz mit vernünftigem Aufwand nur noch schwer herstellen ließe. In diesem Fall kann die Transmission durch ein teillichtdurchlässiges Material, wie z. B. ein Graufilter verringert werden, wodurch dann die Breite prozentual um den gleichen Betrag vergrößerbar und damit wieder leichter herstellbar ist.

Im folgenden werden Ausführungsbeispiele des erfindungsgemäßen Photometers anhand der Zeichnungen näher erläutert. Es zeigen:

Fig. 1    einen schematischen Längsschnitt durch ein Photometer zur Bestimmung der Schleierleuchtdichte mit einer rotierenden Scheibe, die entlang der Linie I - I in Figur 2 geschnitten ist,

Fig. 2    eine Draufsicht auf die Scheibe und

Fig. 3    eine schematische Darstellung der Winkelverhältnisse eines mit dem Auge betrachteten Flächenelements der Umgebung.

Das in Figur 1 dargestellte Photometer hat eine schematisch durch eine Linse 1 angedeutete Abbildungsoptik, eine um eine Rotationsachse 2 rotierende, z. B. aus Metall gefertigte Scheibe 3, welche auf drei Rädern 5, 6, 7, wie in Figur 2 zu sehen ist, gelagert ist, und eine Ulbrichtsche Kugel 9. Das Rad 7 ist als Antriebsrad ausgebildet und von einem (nicht dargestellten) Elektromotor angetrieben. Die Ulbrichtsche Kugel 9 ist an ihrer Innenseite, wie üblich mit einem weißen, diffus reflektierenden Belag 11 beschichtet. Ihre Öffnung 13 liegt unmittelbar hinter der rotierenden Scheibe 3. Neben der Öffnung 13 ist eine weitere Öffnung 15 vorhanden, in der ein photoelektrischer Empfänger 17 zur Messung der Schleierleuchtdichte angebracht ist, dessen spektrale Empfindlichkeit der spektralen Empfindlichkeit des menschlichen Auges angepaßt ist, und dessen elektrische Anschlüsse 18 an eine nicht dargestellte Regel-, Steuer-, Verstärkeroder Anzeigeschaltung angeschlossen werden können, um eine nicht dargestellte Beleuchtung eines Tunneleingangs in ihrer Helligkeit zu regeln, oder um lediglich die Werte der Schleierleuchtdichte zu messen und ev. an eine zentrale Meß- und Auswerteeinrichtung zu übertragen. Eine Mittelung des in den Empfänger fallenden Lichtstroms erfolgt, wie unten beschrieben, über eine genügend große Zeitkonstante des Empfängers 17.

Das Rad 6 ist z. B. derart gelagert, daß es von seiner Laufachse 8 abziehbar ist, um die Scheibe 3 auswechseln zu können. Ebenso ist die Ulbrichtsche Kugel 9 wegnehmbar.

Die Brennweite der Abbildungsoptik 1 richtet sich nach dem Abstand der auszumessenden Umgebung, z. B. der Entfernung zu einem Tunneleingang, der ausnützbaren Baulänge im Photometer, und dem Abstand b der letzten Linse der Abbildungsoptik 1 von der Scheibe 3, wie in Figur 1 dargestellt. Die Entfernung, in der das Photometer vom Tunneleingang anzuordnen ist, wird zweckmässig nach dem Bremsweg der ankommenden Fahrzeuge festgelegt, und beträgt bei einer zugelassenen Geschwindigkeit

3

von achtzig Kilometern pro Stunde annähernd neunzig Meter. Die Abbildungsoptik 1 bildet den zu bewertenden Tunneleingang, sowie dessen Umgebung innerhalb des Öffnungswinkels von bevorzugt zwanzig Grad, die dem Gesichtsfeld eines Kraftfahrers durch die Windschutzscheibe entspricht, auf der rotierenden Scheibe 3 ab.

Die rotierende Scheibe 3 hat eine Öffnung 19. Die Breite $\beta$ der Öffnung 19 wird im Bogenmaß in Abhängigkeit des radialen Abstands r vom Durchstoßpunkt der optischen Achse 27 der Abbildungsoptik 1 durch die Scheibe 3 angegeben. Die Öffnung 19 beginnt, wie in Figur 2 dargestellt, außerhalb eines zentralen lichtundurchlässigen Bereichs 25, mit einem Kreisringsegment 19'. Das Kreisringsegment 19' erstreckt sich über annähernd dreihundert Grad. Der Durchmesser des inneren Kreisrings entspricht einem zentrischen Sehwinkel von zwei Grad und der des äußeren Kreisrings einem zentrischen Sehwinkel von vier Grad. Das Kreisringsegment 19' geht in einen radialen Schlitz 19'' über, dessen Breite $\beta$ radial nach außen abnimmt und am äußeren Schlitzende bei annähernd neunzig Prozent des Scheibenradius nur noch annähernd fünf Grad beträgt. Das äußere Ende des Schlitzes 19'' ergibt sich durch die äußere Begrenzung des zu bewertenden Gesichtsfeldes. Es liegt auf einem zur optischen Achse 27 konzentrischen Kreis, der unter einem Winkel von zwanzig Grad vom der Scheibe 3 zugewandten Hauptpunkt der Abbildungsoptik 1 aus erscheint (Gesichtsfeld des Kraftfahrers). Der genaue Verlauf der Breite $\beta$ in Abhängigkeit vom radialen Abstand r wird weiter unten angegeben.

Der äußere Rand 29 der Scheibe 3 läuft in Umfangsnuten 28 der Räder 5, 6, 7. Das Rad 6 sitzt wegnehmbar, wie bereits oben erwähnt, durch einen (nicht dargestellten) Schnappmechanismus auf der Achse 8 gehalten. Der Schnappmechanismus hat eine am äußeren Ende der Achse 8 federnd gehaltene Kugel. Ober diese Kugel läßt sich das Rad 6 abziehen und die Scheibe 3 dann gegen eine andere austauschen. Anstelle der federnd gehaltenen Kugel kann auch ein Seegerring oder eine Schraubbefestigung verwendet werden.

Durch die Öffnung 19 fällt entsprechend der Breite $\beta$ ein Teil des Lichts des abgebildeten Objekts (Tunneleingang, sowie dessen Umgebung) auf die Oberfläche 11 der Ulbrichtschen Kugel 9 und wird dort diffus reflektiert. Vom diffus reflektierten Licht gelangt ein Teil durch die Öffnung 15 auf die aktive Fläche des Empfängers 17. Der vom Empfänger 17 empfangene Teillichtstrom des über eine Umdrehung der Scheibe 3 gemittelten Lichtstroms ist proportional der Schleierleuchtdichte.

Die Breite $\beta$ (wie oben erwähnt, im Bogenmaß) der Öffnung 19 in Funktion des Abstands r von der optischen Achse 27 ist

$$\beta(\delta) = C \cdot \frac{f_s(\delta)}{\tau_{opt}(\delta)} , \qquad (1)$$

wobei $f_s(\delta) = 10/\delta^2$ die dem menschlichen Auge angenäherte Streufunktion nach Stiles und Holladay ist, die üblicherweise in der Praxis bei der Bestimmung der Schleierleuchtdichte verwendet wird. Der konstante Faktor C wird so ausgewählt, daß einerseits die Schlitzbreite $\beta$ anschließend an den zentralen Bereich 25 nur so groß wird, daß dieser noch sicher in der Scheibe 3 gehalten ist, und andererseits die Öffnung 19 an ihrem äußeren Ende noch so breit ist, daß sie ohne weiteres herstellbar ist. Die Werte der Streufunktion $f_s(\delta)$ wachsen für kleine Winkel stark an. Aus diesem Grund wird als Näherung für die Werte zwischen ein und zwei Grad der Mittelwert dieses Bereiches gewählt. Diese Näherung ergibt das Kreisringsegment 19', das sich mechanisch gut herstellen läßt.

Der Transmissionsgrad $\tau_{opt}(\delta)$ der Abbildungsoptik 1 ist infolge Vignettierung und Aberrationsfehlern vom Winkel $\delta$ abhängig; sein Einfluß kann jedoch bei einer guten Abbildungsoptik 1 vernachlässigt werden, so dass sich in diesem Fall ergibt:

$$\beta(\delta) = C \cdot f_s(\delta) \qquad (2)$$

Der radiale Abstand r vom Rotationspunkt 2 ergibt sich durch die Bildweite b multipliziert mit dem Tangens des Winkels $\delta$ (b = tan $\delta$).

Zur Erklärung der Funktionsweise des Photometers wird von der Beleuchtungsstärke $dE_a(\delta,\alpha)$, die einen (leuchtenden) Geländepunkt 21 (des Objekts), wie in Figur 3 gezeigt, am Ort eines Auges 22 erzeugt, ausgegangen. Die Beleuchtungsstärke $dE_a(\delta,\alpha)$ ist abhängig von den unten dargelegten Winkeln $\delta$ und $\alpha$. Die im Auge 22 sich ergebende Schleierleuchtdichte $dL_s(\delta,\alpha)$ ist die Beleuchtungsstärke $dE_a(\delta,\alpha)$ des Geländepunktes 21 am Ort des Auges 22, multipliziert mit einer winkelabhängigen Streufunktion $f_{sAuge}(\delta)$

der Hornhaut, der Augenlinse und des Glaskörpers:

$$dL_s \, (\delta,\alpha) \; = \; dE_a \, (\delta,\alpha) \bullet f_{sAuge} \, (\delta) \qquad (3)$$

Der Geländepunkt 21 erscheint unter einem Winkel $\delta$ zur optischen Achse 23 des Auges 22 und einem Winkel $\alpha$ zwischen seiner gedachten, auf der optischen Achse 23 senkrecht stehenden Verbindunglinie und der Horizontalen. Die optische Achse 23 des Auges 22 verläuft durch die Mitte der Augenlinse und die Mitte der Netzhautgrube des Auges 22.

Beim Auge kann auf eine Abhängigkeit vom Winkel $\alpha$ verzichtet werden. Die Beleuchtungsstärke einzelner Geländepunkte $dE_a \, (\delta,\alpha)$ auf konzentrischen Kreisringen zur optischen Achse 23 des Auges 22 kann somit zu einer gemittelten Beleuchtungsstärke $dE_{am} \, (\delta)$ zusammengefaßt werden. Die gesamte Schleierleuchtdichte $L_s$ im Auge 22 einer (leuchtenden) Umgebung folgt hiermit zu:

$$L_s \; = \; const \; \cdot \; \int_{\delta_1}^{\delta_2} dE_{ma} \, (\delta) \cdot f_{sAuge} \, (\delta) \cdot d\delta, \qquad (4)$$

wobei die Integration durch das menschliche Auge annähernd über den halben Raumwinkel erfolgt.

Bei dem in Figur 1 dargestellten Photometer wird der Tunnel und seine Umgebung auf die Scheibe 3 durch die Abbildungsoptik 1 abgebildet, wobei die Bildpunkte entsprechend ihrer Lage zu den Winkeln $\delta$ und $\alpha$ eine Beleuchtungsstärke $dE_a \, (\delta,\alpha)$ erzeugen. Durch ein Flächenelement innerhalb der Öffnung 19 der rotierenden Scheibe 3 fließt von den auf einem Kreis unter einem Winkel $\delta$ liegenden Bildpunkten der Lichtstrom $d\Phi_1 \, (\delta,\alpha)$ auf den Belag 11 der Ulbrichtschen Kugel 9. Aufgrund seines Aufbaus und seiner elektrischen Schaltungskomponenten (Widerstände, Induktivitäten und Kapazitäten) besitzt der Empfänger 17 eine Zeitkonstante für die Änderungen des zu messenden Lichtstrom $d\Phi_1 \, (\delta,\alpha)$. Die Zeit für eine Umdrehung der Scheibe 3 wird gleich groß wie die Zeitkonstante des Empfängers 17 gewählt. Hierdurch erfolgt eine Mittelwertbildung des Lichtstroms $d\Phi_1 \, (\delta,\alpha)$ der Geländepunkte, die auf der Scheibe 3 unter dem Winkel $\delta$ abgebildet werden, zu einem Lichtstrom $d\Phi_{1m} \, (\delta)$. Da die Scheibe 3 nicht nur ein lichtdurchlässiges Flächenelement besitzt, sondern eine Öffnung 19 über einen Winkelbereich von $\delta_1$ bis $\delta_2$ mit dem radialen Verlauf der Schlitzbreite $\beta(\delta)$ hat, werden die gemittelten Lichtströme $d\Phi_{1m} \, (\delta)$ über den Winkelbereich von $\delta_1$ bis $\delta_2$ zu einem Lichtstrom $\Phi_2$ integriert und mit der Funktion $\beta(\delta)$ gewichtet. Der auf den gesamten Belag 11 der Ulbrichtschen Kugel 9 fallende Lichtstrom $\Phi_2$ ergibt sich zu

$$\Phi_2 \; = \; const \cdot \int_{\delta_1}^{\delta_2} d\Phi_{1m} \, (\delta) \cdot \beta \, (\delta) \cdot d\delta, \qquad (5)$$

Diese Funktion hat einen Geltungsbereich der durch die verwendete Streufunktion festgelegt ist und z. B. bei der Bestimmung der Schleierleuchtdichte einer Tunneleinfahrt von $\delta_1$ gleich ein Grad bis $\delta_2$ gleich zehn Grad geht. Der vom Photometer gemessene Lichtstrom $\Phi_2$ ist proportional der Schleierleuchtdichte $L_s$ , wie sie in Gleichung (4) dargestellt ist, da der vom Empfänger 17 gemessene Teillichtstrom dem Lichtstrom $\Phi_2$ proportional ist.

Da der Empfänger nur immer einen Teil des gesamten in die Ulbrichtsche Kugel 9 fallenden Lichtstroms $\Phi_2$ mißt, und die Eintrittsöffnung $A_e$ der Abbildungsoptik 1 nicht dem Durchmesser der Augenpupille entspricht, mißt der Empfänger 17 nur eine proportionale Schleierleuchtdichte. Das Gerät lässt sich mit Hilfe eines homogenen Leuchtdichtefeldes, dessen Schleierleuchtdichte gemäss Gleichung (4) leicht berechenbar ist, kalibrieren.

Zur Justierung des Photometers im Gelände, z. B. zur Messung an einer Tunneleinfahrt, sollte diese exakt auf der Scheibe 3 abgebildet sein. Zur Einstellung der exakten Abbildung werden die Ulbrichtsche Kugel 9 und die Scheibe 3 entfernt. Anstelle der Scheibe 3 wird eine Mattscheibe, die bevorzugt mit einem Netz von Polarkoordinaten versehen ist, wobei der Koordinatenursprung der Durchstoßpunkt der optischen Achse 27 der Abbildungsoptik 1 ist, in die Umfangsnuten 28 jedes der drei Räder 5, 6 und 7 eingesetzt. Das abgebildete Gelände ist auf der Mattscheibe zu erkennen. Die Höhen- und Seitenwinkel des Photometers werden so eingestellt, bis die Abbildung des auszumessenden Geländes in der gewünschten Lage ist.

Die Umgebung einer Meßstelle bei z. B. einer Tunneleinfahrt kann so gelegen sein, daß die Sonne während des Tages voll in das Photometer hineinscheint. Das Sonnenlicht wird durch die Abbildungsoptik 1 auf die Scheibe 3 scharf abgebildet und gelangt durch die Öffnung 19 hindurch auf den Belag 11 der Ulbrichtschen Kugel 9 als unscharfe Abbildung. Da die Scheibe 3 aus Metall besteht, tritt infolge ihrer guten Wärmeleitfähigkeit und hohen thermischen Zerstörungsschwelle keine Schädigung auf. Die Beleuchtungsstärke der unscharfen Abbildung der Sonne auf dem Belag 11 der Ulbrichtschen Kugel 9 ist soweit erniedrigt, daß hier ebenfalls keine Beschädigungen auftreten können.

Anstelle des Schlitzes 19 können auch mit gleicher Breite $\beta$ mehrere Löcher in der Scheibe verteilt angebracht werden. Die Löcher sind leichter herstellbar, jedoch müssen ihre Durchmesser und ihre Lage genau bestimmt werden.

Anstelle einer Mittelwertbildung des Lichtstroms während einer Umdrehung der Scheibe 3 über die Zeitkonstante des Empfängers 17, können auch, bevorzugt bei langsam drehender Scheibe, die Meßwerte während einer Umdrehung abgespeichert und dann rechnerisch der Mittelwert gebildet werden. Das Meßintervall richtet sich hier nach der gewünschten Auflösung und der minimalen Spaltbreite 19''. Werden an die erreichte Meßgenauigkeit nicht allzu große Anforderungen gestellt (Genauigkeit zwischen zehn und zwanzig Prozent), so kann die Abbildung unscharf auf die Scheibe 3 eingestellt werden und die Anzahl Meßwerte reduziert werden; es reicht eine Meßung innerhalb der Auflösung eines Bildpunktes.

Anstelle eines von seiner Laufachse 8 abziehbaren Rades 6 zum Auswechseln der Scheibe 3, kann die Scheibe auch in einem Rahmen mit z. B. Schrauben befestigt sein. Dieser Rahmen ist ebenfalls auf drei Rädern gelagert. Der äußere Rand des Rahmes kann mit einer koaxialen Keilriemennut versehen sein, in der ein Keilriemen zu einem Antriebsrad läuft, das von einem Elektromotor angetrieben ist. Zum Auswechseln der Scheibe 3 werden die Schrauben gelöst.

Anstelle der als Ganzes wegnehmbaren Ulbrichtschen Kugel 9 kann eine zweiteilige (quer zur optischen Achse 27 geteilte) Ulbrichtsche Kugel verwendet werden, deren hinterer Teil wegnehmbar ist.

Anstelle der Ulbrichtschen Kugel 9 kann ferner eine Streuscheibe unmittelbar hinter der Scheibe 3 angeordnet sein. Der Empfänger 17 ist in diesem Fall mit seiner lichtempfindlichen Fläche senkrecht zur optischen Achse 27 und in einem Abstand von der Scheibe 3 angeordnet, der so groß ist, daß der durch die Streuscheibe auf den Empfänger fallende Lichtstrom derart gestreut wird, daß eine Ortsabhängigkeit vom Winkel $\delta$ nicht mehr gegeben ist. Da die Streuscheibe unmittelbar hinter der Scheibe 3 steht, kann auf ihr die Abbildung der auszumessenden Umgebung betrachtet werden, bzw. das Photometer nach dieser Abbildung eingestellt werden. Für die Messung sind die Streuscheibe und der Empfänger mit einem lichtdichten Deckel abzudecken. Die Abdeckung kann auch mit einem Okular versehen werden, mit dem die Abbildung betrachtet wird. Mit dieser Anordung lassen sich verschiedene Geländeabschnitte schnell hintereinander ausmessen.

Soll die Schleierleuchtdicht entsprechend einer abweichenden Definition eines anderen Autors gemessen werden, wird die Scheibe ausgewechselt, und eine andere Scheibe eingesetzt, deren radialer Schlitzverlauf, sowie dessen Anfang und Ende entsprechend der zu verwendenden Theorie hergestellt wurde. In der Regel kann mit derselben, oben beschriebenen Abbildungsoptik 1 gearbeitet werden. Die Abbildungsoptik 1 kann als Zoom-Objektiv ausgebildet oder auswechselbar sein, um Messungen mit anderen Öffnungwinkeln zu ermöglichen, z. B. Messungen nach der Theorie von Le Grand (siehe J. J. Vos, "Disability glare - a state of the art report", CIE-Journal, Vol.3, No.2, Dec. 1984, pp. 39 - 53) durchzuführen, die einen Öffnungswinkel des gesamten Gesichtsfeldes von dreißig Grad erfordert.

Das beschriebene Photometer zur Bestimmung der Schleierleuchtdichte ist ohne weiteres in mehreren lichttechnisch gleichen Exemplaren herstellbar, und ermöglicht erstmals die Messung der Schleierleuchtdichte entsprechend einer der Theorien der verschieden Autoren im vorgeschriebenen Öffnungswinkelbereich und mit der vorgeschriebenen Streufunktion und zwar laufend unter rauhen Umgebungsbedingungen.

Die erfindungsgemässe Vorrichtung kann nicht nur zur Bestimmung der Schleierleuchtdichte, sondern allgemein für jede winkelabhängig wertende Messung eines Leuchtdichtefeldes, insbesondere unmittelbare, dauernde derartige Messungen verwendet werden.

**Patentansprüche**

1. Photometer, insbesondere zur Bestimmung der Schleierleuchtdichte $(L_s)$, mit einer Abbildungsoptik (1), einer im Strahlengang der Abbildungsoptik (1) nachgeordneten, mindestens einem lichtdurchlässigen Bereich (19) aufweisenden Scheibe (3) und

6

einem photoelektrischen Empfänger **(17)** zur Detektion wenigstens eines Teils des durch die Scheibe **(3)** transmittierten Lichtstroms, **dadurch gekennzeichnet**, daß
die Scheibe **(3)** wenigstens annähernd in der Bildebene der Abbildungsoptik **(1)** rotierend um ihre geometrische Drehachse **(2)**, welche in der optischen Achse **(27)** der Abbildungsoptik **(1)** liegt, angeordnet ist und die
elektrische Zeitkonstante des Empfängers **(17)** so groß gewählt ist, daß eine Mittelung der Meßwerte über eine Umdrehung der Scheibe **(3)** erfolgt.

2.  Photometer nach Anspruch 1, **dadurch gekennzeichnet**, daß
die Abmessungen und/oder der Transmissionsgrad des bzw. der lichtdurchlässigen Bereiche **(19)** so bemessen ist,
daß der während einer Umdrehung der rotierenden Scheibe auf diese fallende Lichtstrom durch den bzw. die Bereiche in mit dem Abstand von der Drehachse änderndem Maße durchgelassen wird.

3.  Photometer nach Anspruch 1 oder 2, **dadurch gekennzeichnet**, daß
der lichtdurchlässige Bereich bzw. die lichtdurchlässigen Bereiche wenigstens annähernd nach der Formel

$$\beta(\delta) = C \cdot \frac{f_s(\delta)}{\tau_{opt}(\delta)}$$

bemessen ist bzw. sind, worin
$\delta$ der Winkel ist, unter dem die Radien konzentrischer Kreise zur geometrischen Drehachse **(2)** der Scheibe **(3)** vom bildseitigen Hauptpunkt der Abbildungsoptik **(1)** aus erscheinen,
$\beta$ die entlang der $\delta$ zugeordneten, konzentrischen Kreise verlaufende Abmessungen des lichtdurchlässigen Bereichs **(19)** bzw. die Summen der Abmessungen der lichtdurchlässigen Bereiche,
$f_s$ eine von $\delta$ abhängige, der Streufunktion des Auges angenäherte Funktion
$\tau_{opt}(\delta)$ die optische Transmission der Abbildungsoptik **(1)** unter dem Winkel $\delta$ und
C eine Eichkonstante ist,
wobei die Scheibe **(3)** gleichförmig rotierend angetrieben ist.

4.  Photometer nach einem der Ansprüche 1 bis 3, **dadurch gekennzeichnet**, daß
ein zentraler Bereich **(25)** der Scheibe **(3)**,
durch den deren geometrische Achse **(2)** verläuft,
lichtundurchlässig ist.

5.  Photometer nach einem der Ansprüche 1 bis 4, **dadurch gekennzeichnet**, daß
der lichtdurchlässige Bereich **(19)** im wesentlichen durch nur einen einzigen Schlitz **(19)** gebildet ist.

6.  Photometer nach Anspruch 5, **dadurch gekennzeichnet**, daß
die Breite des radialen Schlitzes **(19)** nach außen abnimmt.

7.  Photometer nach einem der Ansprüche 1 bis 6, **dadurch gekennzeichnet**, daß
im Strahlengang zwischen der Scheibe **(3)** und dem Empfänger **(17)** ein das von dem lichtdurchlässigen Bereich **(19)** bzw. den lichtdurchlässigen Bereichen durchgelassene Licht diffus auf den Empfänger **(17)** streuendes Element, vorzugsweise eine Ulbrichtsche Kugel **(9)**, angeordnet ist.

8.  Photometer nach Anspruch 7, **dadurch gekennzeichnet**, daß
das diffus streuende Element **(9)** und die Scheibe **(3)** entfernbar sind und
daß eine an den Ort der Scheibe **(3)** einsetzbare, durchscheinende Scheibe vorgesehen ist, um einen Umgebungsbereich aufgrund der Lage seiner Abbildung auf der durchscheinenden Scheibe zu bestimmen.

9.  Photometer nach einem der Ansprüche 1 bis 8, **dadurch gekennzeichnet**, daß
    der lichtdurchlässige Bereich **(19)** bzw. die Lichtdurchlässigen Bereiche **(19)** wenigstens teilweise mit
    einem teilweise lichtdurchlässigen Material abgedeckt sind.

## Claims

1.  Photometer, especially for determining veiled luminous density ($L_s$), with imaging optics (1),
    a plate (3) inserted downstream in the ray configuration of the imaging optics (1) and having at least
    one translucent region (19) and
    a photoelectric receiver (17) for detecting at least a portion of the light flux transmitted through the plate
    (3), characterised in that
    the plate (3) is mounted at least approximately in the image plane of the imaging optics (1) so as to
    rotate around its geometrical axis of rotation (2), which axis lies in the optical axis (27) of the imaging
    optics (1), and the
    selected electrical time constant of the receiver (17) is so high that average measured values are
    ascertained upon rotation of the plate (3).

2.  Photometer according to Claim 1, characterised in that
    the dimensions and/or the transmission intensity of the translucent region or regions (19) are calibrated
    such
    that the light flux falling on the rotating plate during rotation of said plate is passed through the region
    or regions in quantity corresponding approximately to the distance from the axis of rotation.

3.  Photometer according to Claim 1 or 2, characterised in that
    the translucent region or translucent regions are calibrated at least approximately according to the
    formula

$$\beta(\delta) = C \cdot \frac{f_s(\delta)}{\tau_{opt}(\delta)}$$

wherein
$\delta$ is the angle at which the radii of circles concentric to the geometric axis of rotation (2) of the plate (3)
appear from the internal perspective centre of the imaging optics (1),
$\beta$ represents the dimensions of the translucent region (19) intersecting the $\delta$-related concentric circles,
or the sums of the dimensions of the translucent regions,
$f_s$ is a function dependent on $\delta$, approximating the dispersion function of the eye
$\tau_{opt}(\delta)$ represents the optical transmission of the imaging optics (1) at the angle $\delta$ and
C is a calibration constant,
and wherein the plate (3) is driven in uniform rotation.

4.  Photometer according to one of Claims 1 to 3, characterised in that
    a central region (25) of the plate (3), through which the plate's geometrical axis (2) passes,
    is translucent.

5.  Photometer according to one of Claims 1 to 4, characterised in that
    the translucent region (19) is essentially formed by only a single slit (19).

6.  Photometer according to Claim 5, characterised in that
    the width of the radial slit (19) diminishes in the outward direction.

7.  Photometer according to one of Claims 1 to 6, characterised in that
    in the ray configuration between the plate (3) and the receiver (17) an element, preferably an Ulbricht
    sphere-type photometer (9), is disposed, which diffusely disperses over the receiver (17) the light
    transmitted from the translucent region (19) or regions.

**8.** Photometer according to Claim 7, characterised in that
the diffusely dispersing element (9) and the plate (3) can be removed, and
in that a transparent plate that can be fitted in place of the plate (3) is provided in order to
fix a surrounding region on the basis of the position of said region's image on the transparent plate.

**9.** Photometer according to one of Claims 1 to 8, characterised in that
the light-transmitting region (19) or regions (19) are covered at least in part by a partially light-transmitting material.

**Revendications**

**1.** Photomètre, en particulier pour la détermination de l'intensité d'éclairement de voile ($L_s$), avec une optique de reproduction (1),
un disque (3) placé dans la trajectoire des rayons de l'optique de reproduction (1) après celle-ci et présentant au moins un domaine (19) transparent à la lumière et
un récepteur photoélectrique (17) pour la détection d'au moins une partie du flux lumineux transmis par le disque (3), **caractérisé en ce que**
le disque (3) est disposé au moins approximativement dans le plan image de l'optique de reproduction (1) en rotation autour de son axe de révolution géométrique (2), qui se trouve dans l'axe optique (27) de l'optique de reproduction (1), et en ce que la
constante de temps électrique du récepteur (17) est choisie avec une grandeur telle qu'il se produise une mise à la moyenne des valeurs mesurées pour une révolution du disque (3).

**2.** Photomètre selon la revendication 1, **caractérisé en ce que**
les dimensions et/ou le degré de transmission du ou des domaines (19) transparents à la lumière sont telles
que le flux lumineux tombant sur le disque rotatif durant une de ses révolutions soit transmis par le ou les domaines dans une mesure qui varie avec la distance à l'axe de révolution.

**3.** Photomètre selon la revendication 1 ou 2, **caractérisé en ce que**
le ou les domaines transparents à la lumière sont, dimensionnés au moins approximativement selon la formule

$$\beta(\delta) \;=\; C \cdot \frac{f_s(\delta)}{\tau_{opt}(\delta)}$$

dans laquelle
$\delta$ est l'angle par rapport à l'axe de révolution (2) géométrique du disque (3) selon lequel les rayons de cercles concentriques audit axe émergent du point principal du côté image de l'optique de reproduction (1),
$\beta$ les dimensions du domaine (19) transparent à la lumière, respectivement les sommes des dimensions des domaines transparents à la lumière, parcourant la longueur des cercles concentriques correspondant à $\delta$,
$f_s$ une fonction dépendant de $\delta$, proche de la fonction de diffusion de l'oeil,
$\tau_{opt}(\delta)$ la transmission optique de l'optique de reproduction (1) selon l'angle $\delta$ et
C une constante d'étalonnage,
le disque (3) étant entraîné en rotation de manière constante.

**4.** Photomètre selon l'une quelconque des revendications 1 à 3, **caractérisé en ce**
qu'un domaine central (25) du disque (3),
par lequel passe son axe géométrique (2)
est opaque à la lumière.

**5.** Photomètre selon l'une quelconque des revendications 1 à 4, **caractérisé en ce que** le domaine (19) transparent à la lumière est formé essentiellement seulement par une fente unique (19).

**6.** Photomètre selon la revendication 5, **caractérisé en ce que** la largeur de la fente radiale (19) diminue vers l'extérieur.

**7.** Photomètre selon l'une quelconque des revendications 1 à 6, **caractérisé en ce que** dans la trajectoire des rayons entre le disque (3) et le récepteur (17) est disposé un élément, de préférence une sphère d'Ulbricht (9), diffusant la lumière transmise par le domaine (19) transparent à la lumière, respectivement par les domaines transparents à la lumière, de manière diffuse sur le récepteur (17).

**8.** Photomètre selon la revendication 7, **caractérisé en ce que** l'élément (9) diffusant de manière diffuse et le disque (3) peuvent être éloignés et en ce qu'il est prévu un disque translucide insérable à la place du disque (3), afin de déterminer un domaine environnant sur base de la position de sa reproduction sur le disque translucide.

**9.** Photomètre selon l'une quelconque des revendications 1 à 8, **caractérisé en ce que** le domaine (19) transparent à la lumière, respectivement les domaines (19) transparents à la lumière sont recouverts au moins en partie d'un matériau partiellement transparent à la lumière.

Fig. 1

Fig. 2

Fig. 3